# EUROPÄISCHE PATENTSCHRIFT

(11) **EP 1 648 120 B1**
(45) Veröffentlichungstag und Bekanntmachung des Hinweises auf die Patenterteilung: **03.03.2010**
(21) Anmeldenummer: 05018019.9
(22) Anmeldetag: 19.08.2005
(51) Int. Cl.: H04W 4/10

(54) **Kommunikationsverfahren mit push-to-talk-Funktionalität**
Communication method including push-to-talk functionality
Procédé de communication avec fonctionnalitée push-to-talk

(30) Priorität: 12.10.2004 DE 102004049561
(43) Veröffentlichungstag der Anmeldung: 19.04.2006
(73) Patentinhaber: Deutsche Telekom AG, 53113 Bonn (DE)
(72) Erfinder: Trinkel, Marian, Dipl.-Ing., 52372 Kreuzau OT Untermaubach (DE); Müller, Christel, Dipl.-Ing., 15732 Schulzendorf (DE); Daußmann, Frank, 67454 Hassloch (DE)
(74) Vertreter: COHAUSZ DAWIDOWICZ HANNIG & SOZIEN

(56) Entgegenhaltungen:
- WO-A-01/31968
- WO-A-01/37526
- WO-A-98/11710
- WO-A-02/085051
- WO-A-2004/012421
- US-A- 6 018 668
- US-A1- 2002 061 013

## Beschreibung

Die Erfindung betrifft ein Verfahren zur Durchführung einer Kommunikation über wenigstens ein Telekommunikationsnetzwerk zwischen einem sendenden Telekommunikationsgerät und einer Gruppe von empfangenden Telekommunikationsgeräten, bei der die Gruppe von empfangenden Telekommunikationsgeräten anhand einer Kennung des sendenden Telekommunikationsgerätes ausgewählt wird, und wobei im Telekommunikationsnetzwerk wenigstens eine Gruppe von empfangenden Telekommunikationsgeräten in Abhängigkeit von der Kennung des sendenden Telekommunikationsgerätes ausgewählt wird, wobei die Netzwerkkennungen empfangender Telekommunikationsgeräte in einer Liste vorgehalten werden und durch den Anruf einer speziellen Netzwerkkennung ein netzwerkbasierter Dienst gestartet wird. Die Erfindung betrifft ebenso ein System zur Durchführung einer solchen Kommunikation.

Ein solches Verfahren und System zur Gruppenkommunikation ist bereits aus der WO 01/31968 A1 und der US 6 018 668 A bekannt, setzt sich jedoch nicht damit auseinander, auch Antworten der angerufenen Gruppenteilnehmer zuzulassen.

Eine Sprachkommunikation zwischen wenigstens einem sendenden Telekommunikationsgerät und wenigstens einem, insbesondere mehreren gleichzeitig empfangenden Telekommunikationsgeräten, ist in der Mobilfunktechnik unter dem Begriff der push-to-talk-Funktionalität bekannt. Diese Funktionalität kann mit hierfür speziell ausgebildeten Mobilfunktelefonen wahrgenommen werden und bedeutet im Wesentlichen, dass ein Telekommunikationsteilnehmer nach dem Drücken einer entsprechenden push-to-talk-Taste, kurz PTT-Taste, mit mehreren anderen Telekommunikationsteilnehmern gleichzeitig kommunizieren kann, wobei jedoch innerhalb einer definierten geschlossenen Gruppe von Telekommunikationsteilnehmern immer nur eine Person, nie jedoch mehrere Personen gleichzeitig sprechen können. Es handelt sich dementsprechend um ein Halbduplexverfahren.

Bei dieser bekannten push-to-talk-Funktionalität sind sämtliche Telekommunikationsgeräte der geschlossenen Benutzergruppe in einer permanenten Telekommunikationsverbindung, beispielsweise über das GSM-Netz eines Mobilfunkbetreibers, miteinander verbunden, wobei die eigentliche Kommunikation, d.h. die Sprachübermittlung, paketgebunden beispielsweise über den GPRS-Standard erfolgt und die Sprachübermittlung dann während der bestehenden Kommunikationsverbindung durch das Aussenden von GPRS-Paketen erfolgt. Hierfür drückt der Benutzer eines Mobiltelefons die sogenannte PTT-Taste, wodurch ihm, sofern nicht schon für einen anderen Nutzer geschehen, von einem zentralen Server der Sprechkanal eröffnet und für die Dauer des Tastendruckes reserviert bleibt. Während dieser Zeit kann nur derjenige sprechen, der die PTT-Taste gedrückt hat und die anderen Gruppenteilnehmer können lediglich zuhören.

Nachteilig bei diesem Verfahren ist es, dass eine ständige Kommunikationsverbindung über das GSM-Netz eines Mobilfunkbetreibers bestehen muss und dass weiterhin dieses Verfahren nur mit speziell hierfür geeigneten Mobiltelefonen durchführbar ist.

Ebenso ist es im Stand der Technik bekannt, mittels Telefonen jeglicher Art sogenannte Konferenzschaltungen aufzubauen, bei denen mehrere Kommunikationsteilnehmer gleichzeitig miteinander sprechen und auch zuhören können. Zwar kann dieses Verfahren mit jeglichem Telefon durchgeführt werden, jedoch muss auch hierbei permanent eine Kommunikationsverbindung bestehen bzw. ein Benutzer eines Telefons kann nur solange an der Gruppenkommunikation teilnehmen, wie seine Telekommunikationsverbindung in die Gruppe aktiv besteht und aufrecht erhalten wird.

Aufgabe der Erfindung ist es, ein Verfahren und ein System bereit zu stellen, bei dem geräteunabhängig, d.h. mittels jedem verfügbaren Telekommunikationsgerät, eine Kommunikation zu mehreren Telekommunikationsteilnehmern einer Gruppe und auch eine weitere Kommunikation innerhalb der Gruppe stattfinden kann, wobei eine Telekommunikationsverbindung nicht permanent aufrecht erhalten bleiben muss.

Diese Aufgabe wird erfindungsgemäß dadurch gelöst, dass durch den Dienst eine Nachricht an all diejenigen Telekommunikationsgeräteversendet wird, deren Netzwerkkennung in dieser Liste gespeichert sind, wobei sämtliche in dieser Liste eingetragenen Netzwerkkennungen von empfangenden Telekommunikationsgeräten und die Netzwerkkennung des aufrufenden Telekommunikationsgeräts in Listen aller empfangenden Telekommunikationsgeräte eingetragen werden, so dass nach einem ersten initiierenden Aufruf alle durch das erstmalig aufrufende Telekommunikationsgerät bestimmten anderen Telekommunikationsgeräte identische Listen erhalten, mit Ausnahme der eigenen Netzwerkkennung.

Eine Kennung ist dabei dafür vorgesehen das Telekommunikationsgerät oder dessen Benutzer zu identifizieren, beispielsweise im Telekommunikationsnetz. So kann es sich bei einer solchen Kennung zum Beispiel handeln um die Netzwerkkennung des Telekommunikationsgerätes, also z.B. bei Festnetztelefonen um die Anschluß-Telefonnummer (CLI: Call-Line-Identity) , bei Mobiltelefonen um das Home-Location-Register (HLR), um eine Gerätekennung wie z.B. die 15-stellige IMEI (International Mobil Equipment Identity), um die Kartenkennung einer SIM-Karte (z.B. bei Mobiltelefonen) oder auch um biometrische Kennungen eines Benutzers, wie z.B. Fingerabdruck, Sprache etc.

Wesentlicher Kerngedanke bei diesem Verfahren ist es, dass eine push-to-talk-ähnliche Funktionalität rein netzwerkbasiert bereitgestellt wird, ohne dass die jeweiligen Telekommunikationsgeräte hierfür eine besondere Eignung aufweisen müssen.

Dementsprechend ist es vorgesehen, dass ein netzwerkbasierter Dienst zur Durchführung dieser erfindungsgemäßen Kommunikation durch Anruf einer speziellen Netzwerkkennung, z.B. einer Telefonnummer gestartet wird.

Hierbei ist es grundsätzlich unerheblich, um welche Art von Telekommunikationsgerät es sich handelt, da jegliches, in ein Netzwerk eingebundenes Telekommunikationsgerät eine Netzwerkkennung/Gerätekennung und ggfs. weitere Kennungen aufweist. Dies ist beispielsweise bei einem Festnetztelefon die sogenannte Call-Line-Identity (CLI), bei einem Mobiltelefon im Wesentlichen das sogenannte Home-Location-Register (HLR) bzw. bei einem internetfähigen Computer die permanent oder zeitweise vergebene IP-Adresse.

Wesentlich bei der Durchführung des erfindungsgemäßen Verfahrens ist es, dass durch den Aufruf einer speziellen Netzwerkkennung ein netzwerkbasierter Dienst gestartet wird, dieser Dienst also nicht permanent zwischen allen Teilnehmern aufrecht erhalten wird.

Hierbei wird es als besonders vorteilhaft empfunden, wenn die anzurufende Netzwerkkennung, durch deren Aufruf der Dienst gestartet wird, unter einer Taste des sendenden Telekommunikationsgerätes gespeichert ist. Hierbei kann es sich im Wesentlichen um eine beliebige Taste des jeweiligen Gerätes handeln, beispielsweise eine Taste der üblicherweise vorgesehenen Tastatur oder auch um eine separat vorgesehene Sonderfunktionstaste. Hierdurch erhält der Benutzer eines Telekommunikationsgerätes den Eindruck, lediglich durch den Tastendruck eine PTT-ähnliche Funktion aufzurufen, bei der eine Kommunikation zu wenigstens einem weiteren Kommunikationsteilnehmer, bevorzugt zu mehreren Telekommunikationsteilnehmern, möglich ist.

Erfindungsgemäß ist es vorgesehen, dass im Telekommunikationsnetzwerk, insbesondere in einer Vermittlungsstelle, wenigstens eine Gruppe von empfangenden Telekommunikatiortsgeräten in Abhängigkeit von einer, insbesondere in das Netzwerk übermittelten Kennung eines sendenden Telekommunikationsgerätes ausgewählt wird. Dabei werden diejenigen Netzwerkkennungen empfangender Telekommunikationsgeräte in einer netzintemen Liste vorgehalten.

Dies bedeutet, dass beispielsweise beim Anruf der dienststartenden Netzwerkkennung eine Nachricht an all diejenigen Telekommunikationsgeräte versendet wird, deren Netzwerkkennungen in einer Liste gespeichert sind.

Hierfür bedarf es nicht notwendigerweise einer gleichzeitig zu allen Telekommunikationsgeräten bestehenden Verbindung, sondern es kann beispielsweise auch vorgesehen sein, dass eine Nachricht, beispielsweise eine Sprachnachricht, zunächst netzintern gespeichert wird und anschließend an alle in der Empfangsliste aufgelisteten Telekommunikationsgeräte versendet wird, so dass jedes der für den Empfang vorgesehenen Telekommunikationsgeräte die entsprechende Nachricht, beispielsweise eine Sprachnachricht, erhält. Ist ein derartig ausgewähltes Telekommunikationsgerät unter Umständen nicht empfangsbereit, so kann es auch vorgesehen sein, dass eine Nachricht gespeichert vorgehalten wird für den späteren Abruf.

Gemäß einer bevorzugten Ausführung kann es weiterhin vorgesehen sein, dass im Telekommunikationsnetzwerk, insbesondere in einer Vermittlungsstelle, wenigstens ein Gruppe empfangende Telekommunikationsgeräte in Abhängigkeit von einem Parameter ausgewählt wird bzw. werden. Es kann sich hierbei grundsätzlich um einen beliebigen Parameter handeln, der im Netzwerk vorgegeben ist oder durch den Benutzer zur Verfügung gestellt wird. Neben der Netzwerkkennung des sendenden Telekommunikationsgerätes können dementsprechend weitere Parameter hinzutreten, wie beispielsweise auch die Netzwerkkennung eines angerufenen Telekommunikationsgerätes, beispielsweise die Netzwerkkennung eines Dienstservers, mittels dessen Hilfe der erfindungsgemäße Dienst gestartet wird oder eine der obengenannten alternativen Kennungen, die dann als zusätzlicher Parameter dient.

So können mehrere dienststartende Netzwerkkennungen vorgesehen sein, wobei jeweils das erfindungsgemäße Verfahren ausgeführt wird, jedoch mit hierdurch entsprechend unterschiedlich festgelegten, für den Empfang vorgesehener Telekommunikationsgeräte.

Es können beispielsweise innerhalb des Telekommunikationsnetzwerkes mehrere auswählbare Listen vorliegen, in der jeweils Gruppen von Netzwerkkennungen für den Empfang vorgesehener Telekommunikationsgeräte gespeichert sind, wobei eine Liste mit den darin enthaltenen Kennungen über einen entsprechend übermittelten Parameter auswählbar ist. Es kann hierbei ebenso vorgesehen sein, dass der Benutzer, der ein sendendes Telekommunikationsgerät bedient, eine Parametereingabe auf der Tastatur des Gerätes für diese Auswahl vornimmt.

So ist es bevorzugt vorgesehen, dass eine Gruppe von empfangenden Telekommunikationsgeräten von dem Benutzer des sendenden Telekommunikationsgerätes bestimmbar ist, beispielsweise dadurch, dass dieser Benutzer die jeweiligen Netzwerkkennungen der empfangenen Telekommunikationsgeräte in wenigstens eine Liste einträgt. Eine derartige Liste kann dementsprechend unter der Verwaltung des Benutzers stehen. Eine solche Liste kann bevorzugt durch die Kennung und/oder einen Parameter ausgewählt werden.

Ebenso ist es in einer anderen Ausführung möglich, dass das wenigstens eine empfangende Telekommunikationsgerät vom Netzwerkbetreiber bestimmbar ist, wobei beispielsweise wiederum die jeweiligen Netzwerkkennungen in einer Liste vorgehalten werden können. Dies ist jedoch nicht zwingend nötig.

Beispielsweise ist so eine netzwerkbasierte Funktion möglich, bei der eine an mehrere Teilnehmer zu kommunizierende Nachricht oder reine Daten nach Absendung durch das sendende Telekommunikationsgerät an all diejenigen Telekommunikationsgeräte versendet wird, die sich in einer bestimmten räumlichen Umgebung um das sendende Gerät befinden.

Dies ist besonders deshalb leicht zu realisieren, da durch die Absendung seitens des sendenden Telekommunikationsgerätes dessen Kennung, insbesondere dessen Netzwerkkennung bekannt ist und hierdurch das sendende Gerät lokalisiert werden kann. So kann dann durch eine entsprechende Überprüfung innerhalb des Netzwerkes, beispielsweise in einer Vermittlungsstelle, festgestellt werden, welche empfangsbereiten Telekommunikationsgeräte sich in einer bestimmten räumlichen Umgebung um das Gerät herum befinden, um sodann zu diesen Telekommunikationsgeräten die Nachrichten- und/oder Datenkommunikation aufzubauen.

Allgemein kann es sich im Rahmen der Erfindung bei der Kommunikation um eine rein datenmäßige Kommunikation lediglich zwischen den beteiligten Geräten handeln oder auch um eine Kommunikation der jeweils die Geräte bedienenden Benutzer, z.B. durch Sprachübertragung.

Neben der Festlegung der jeweils teilnehmenden Telekommunikationsgeräte durch den Benutzer in einer Liste oder durch das Telekommunikationsnetzwerk, beispielsweise wie vorgenannt parametrisiert durch die räumliche Anordnung des sendenden Gerätes, sind darüber hinaus beliebige andere Parameter denkbar, in deren Abhängigkeit die empfangenen Telekommunikationsgeräte ausgewählt werden. Diese Parameter können entweder dem Netz vorliegen oder aber dem Netz beispielsweise durch den Benutzer explizit zur Verfügung gestellt werden, wie z.B. auch biometrische Daten.

Gemäß der Erfindung kann es vorgesehen sein, dass die zu sendende Nachricht bzw. die zu sendenden Daten von einem Telekommunikationsgerät in ein Telekommunikationsnetzwerk abgesendet werden und hierbei beispielsweise eine Vermittlungsstelle erreichen. Gemäß der Erfindung kann es sodann vorgesehen sein, dass die abgesandten Daten über dasselbe Telekommunikationsnetzwerk an die empfangenden Telekommunikationsgeräte übermittelt wird, wie es bei üblichen Kommunikationen der Fall ist. Beispielsweise wird dies bei telefonatähnlichen Sprachmitteilungen der Fall sein können.

In einer anderen bevorzugten Ausgestaltung des erfindungsgemäßen Verfahrens kann es darüber hinaus ebenso möglich sein, dass das Netzwerk, welches eine zu kommunizierende Nachricht bzw. Daten von einem sendenden Telekommunikationsgerät entgegennimmt, ein anderes ist als das Netzwerk, mittels dem die Nachricht bzw. die Daten an die empfangenden Telekommunikationsgeräte gesendet wird.

Hierbei kann es sich bei dem Sendenetzwerk beispielsweise um ein Einweg-Rundfunknetzwerk handeln.

Es ist dementsprechend im Rahmen der Erfindung denkbar, dass ein Benutzer mittels eines Telekommunikationsgerätes über das übliche, hierfür vorgesehene Telekommunikationsnetzwerk eine auszusendende Nachricht absetzt, wobei diese Nachricht dann jedoch über ein Rundfunknetzwerk ausgestrahlt wird, gegebenenfalls mit einer derartigen Verschlüsselung, dass nur die für den Empfang vorgesehenen Telekommunikationsgeräte in der Lage sind, die dann ausgestrahlte Nachricht zu empfangen.

Hierfür kann es auch vorgesehen sein, dass Telekommunikationsgeräte ein entsprechendes Empfangsteil für derartige Rundfunksendungen aufweisen. Üblicherweise wird ein Empfang jedoch mit den standardmäßig in Telekommunikationsgeräten vorgesehenen Empfangsteilen möglich sein, insbesondere wenn es sich um Mobiltelefone handelt.

Wird nun der Benutzer eines empfangenden Telekommunikationsgerätes aus der Gruppe der für den Empfang vorgesehenen Geräte den Wunsch haben, auf die empfangene Nachricht zu reagieren, so kann seinerseits ein entsprechender Ruf wiederum durch Drücken der hierfür vorgesehenen Taste oder durch Aufruf der dienststartenden Netzwerkkennung eine Nachricht abgesetzt werden, wobei diese Nachricht all diejenigen Teilnehmer erreicht, die in der Gruppe des dann sendenden Kommunikationsgerätes gespeichert sind oder in einer vorgesehenen Datei (zentral/dezentral) vorgehalten werden. Hierfür ist es bevorzugt vorgesehen, dass bei allen in einer Gruppe teilnehmenden Telekommunikationsgeräten bzw. hinter den jeweils identifizierenden (Netzwerk-) Kennungen dieselben in der Gruppe teilnehmenden Netzwerkkennungen gespeichert sind. So wird gewährleistet, dass ein Nachrichtenaustausch unter allen Teilnehmern möglich wird.

Gemäß einer Weiterbildung des Verfahrens kann es ebenso vorgesehen sein, dass eine Kommunikationsverbindung zwischen einem sendenden Telekommunikationsgerät und einem empfangenden Telekommunikationsgerät in eine Kommunikation nur zwischen diesem beiden Teilnehmer, z.B. in ein normales Telefonat überführt wird.

Dies ist insbesondere dann vorteilhaft, wenn Nachrichten ausgetauscht werden sollen, die lediglich diese beiden Telekommunikationsteilnehmer berührt, ohne dass die anderen Teilnehmer der Gruppe diese Nachrichten erhalten sollen. Hierfür kann es vorgesehen sein, mittels einer Parameterübergabe in das Telekommunikationsnetz eine entsprechende Übernahme in eine übliche Telekommunikationsverbindung zu initiieren. Sodann können nach der Überführung in ein normales Telefonat diese entsprechenden Gruppenteilnehmer aus der Gruppe zumindest zeitweise, d.h. solange wie diese ihr Telefonat führen, gestrichen werden.

In einer anderen oder weiteren Ausführung kann es auch vorgesehen sein, dass sämtliche Nutzer von Telekommunikationsgeräten, die in einer Liste eines einen Gruppenruf initiierenden Telekommunikationsgerätes/Benutzters gespeichert sind weiterhin untereinander in der Gruppe kommunizieren können, auch wenn der erste Nutzer nicht weiter an der Kommunikation teilnimmt.

Erfindungsgemäß ist es vorgesehen, dass sämtliche in eine Liste eingetragenen Netzkennungen von empfangenden Telekommunikationsgeräten und die Netzkennung des aufrufenden Telekommunikationsgerätes in die Listen aller empfangenden Telekommunikationsgeräte eingetragen werden, so dass nach einem ersten initiierenden Aufruf der erfindungsgemäßen Funktion alle durch das erstmalig aufrufende Telekommunikationsgeräte bestimmten anderen Telekommunikationsgeäte identische Listen erhalten (insbesondere jeweils mit Ausnahme der eigenen Netzkennung).

Ausführungsbeispiele der Erfindung sind in den nachfolgenden Zeichnungen dargestellt. Es zeigen:

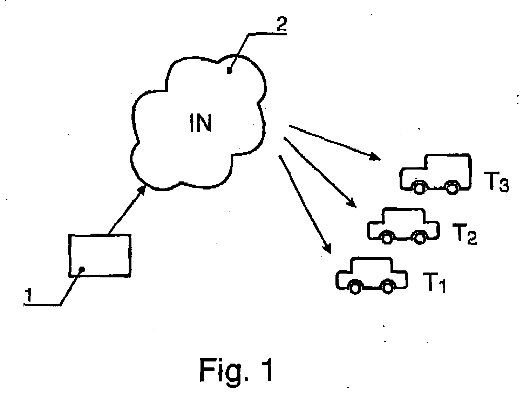

- Figur 1:: einen Einsatz des erfindungsgemäßen Verfahrens für ein Flottenmanagement .

Die Figur 1 verdeutlicht das erfindungsgemäße Verfahren, beispielsweise im Rahmen eines Flottenmanagements, wie es z.B. für Taxiunternehmen sinnvoll sein kann. Hier kann es beispielsweise vorgesehen sein, dass eine Taxizentrale 1 durch den Anruf einer speziellen Rufnummer mittels eines normalen festnetzgebundenen Telefons zu einer Vermittlungsstelle im intelligenten Netz 2 eines Netzbetreibers gelangt, wo aufgrund des Anrufs die Call-Line-Identity und damit die Netzkennung der Taxizentrale 1 oder auch eine andere Kennung ermittelt wird. Aufgrund dieser Netzkennung (CLI) kann im intelligenten Netz festgestellt werden, dass der Dienst für den Gruppenaufruf von dem Taxiunternehmen stammt, so dass dann in einer entsprechenden, von dem Taxiunternehmen eingerichteten Liste sämtliche Netzwerkkennungen und damit beispielsweise Telefonnummern der mobil in der Umgebung befindlichen Taxifahrer ausgewählt wird. Es besteht somit die Möglichkeit, den Aufruf, beispielsweise welcher der Taxifahrer einen Fahrgast übernehmen kann, an alle Taxifahrer T1, T2 und T3 zu übermitteln, deren Telefonnummern und damit Netzwerkkennungen in der jeweiligen Liste gespeichert sind.

Durch Anwendung desselben erfindungsgemäßen Verfahrens kann daraufhin jeder der Taxifahrer seine Bereitschaft erklären, den Fahrgast aufzunehmen, wofür der Taxifahrer ebenfalls den erfindungsgemäßen Dienst aufruft, nunmehr jedoch ausgehend von seinem jeweiligen Mobiltelefon. Hierbei wird sicher gestellt, dass beispielsweise, wenn der Taxifahrer T1 den Ruf entgegennimmt, gleichzeitig die Zentrale und auch die Taxifahrer T2 und T3, die dann zu der Empfangsgruppe des Taxifahrers T1 zählen, darüber informiert werden, dass dieser Taxifahrer den Fahrgast entgegennehmen wird. Daraufhin brauchen sich die Taxifahrer T2 und T3 weiterhin nicht mehr zu melden.

## Patentansprüche

1. Verfahren zur Durchführung einer Kommunikation über wenigstens ein Telekommunikationsnetzwerk zwischen einem sendenden Telekommunikationsgerät und einer Gruppe von empfangenden Telekommunikationsgeräten, bei der die Gruppe von empfangenden Telekommunikationsgeräten anhand einer Kennung des sendenden Telekommunikationsgerätes (1;3) ausgewählt wird, und wobei im Telekommunikationsnetzwerk (2) wenigstens eine Gruppe von empfangenden Telekommunikationsgeräten (T1,T2,T3; 6) in Abhängigkeit von der Kennung des sendenden Telekommunikationsgerätes (1 ;3) ausgewählt wird, wobei die Netzwerkkennungen empfangender Telekommunikationsgeräte (T1,T2,T3; 6) in einer Liste vorgehalten werden und durch den Anruf einer speziellen Netzwerkkennung ein netzwerkbasierter Dienst gestartet wird, **dadurch gekennzeichnet,dass** durch den Dienst eine Nachricht an all diejenigen Telekommunikationsgeräte versendet wird, deren Netzwerkkennung in dieser Liste gespeichert sind, wobei sämtliche in dieser Liste eingetragenen Netzwerkkennungen von empfangenden Telekommunikationsgeräten und die Netzwerkkennung des aufrufenden Telekommunikationsgeräts in Listen aller empfangenden Telekommunikationsgeräte eingetragen werden, so dass nach einem ersten initiierenden Aufruf alle durch das erstmalig aufrufende Telekommunikationsgerät bestimmten anderen Telekommunikationsgeräte identische Listen erhalten, mit Ausnahme der eigenen Netzwerkkennung.

2. Verfahren nach Anspruch 1, **dadurch gekennzeichnet, dass** die Kennung eine Netzwerkkennung, Gerätekennung, Kartenkennung oder Benutzerkennung, insbesondere eine biometrische Benutzerkennung ist.

3. Verfahren nach einem der vorherigen Ansprüche, **dadurch gekennzeichnet, dass** die Gruppe von empfangenden Telekommunikationsgeräten (T1, T2, T3; 6) von dem Benutzer des sendenden Telekommunikationsgerätes (1;3) bestimmbar ist, insbesondere durch Eintrag der Netzkennungen in wenigstens eine Liste.

4. Verfahren nach einem der vorherigen Ansprüche, **dadurch gekennzeichnet, dass** die Gruppe von empfangenden Telekommunikationsgeräten (T1, T2, T3; 6) von dem Netzwerkbetreiber bestimmbar ist, insbesondere durch Eintrag dessen Netzkennung in wenigstens eine Liste

5. Verfahren nach einem der vorherigen Ansprüche, **dadurch gekennzeichnet, dass** eine anzurufende Netzwerkkennung, durch deren Aufruf der netzwerkbasierte Dienst zur Durchführung der Kommunikation gestartet wird, unter einer Taste des sendenden Telekommunikationsgeräts gespeichert ist.

6. Verfahren nach einem der vorherigen Ansprüche, **dadurch gekennzeichnet, dass** das Netzwerk (4), welches eine zu kommunizierende Nachricht von einem sendenden Telekommunikationsgerät (1) entgegennimmt ein anderes ist als das Netzwerk (2), mittels dem die Nachricht an die empfangenden Telekommunikationsgeräte (T1,T2,T3) gesendet wird.

7. Verfahren nach einem der vorherigen Ansprüche, **dadurch gekennzeichnet, dass** eine Kommunikationsverbindung zwischen einem sendenden Telekommunikationsgerät und einem empfangenden Telekommunikationsgerät in ein normales Telefonat überfährt wird.

8. System zur Durchführung einer Kommunikation über wenigstens ein Telekommunikationsnetzwerk zwischen einem sendenden Kommunikationsgerät und einer Gruppe von empfangenden Telekommunikationsgeräten, bei der die Gruppe von empfangenden Telekommunikationsgeräten anhand einer Kennung des sendenden Telekommunikationsgerätes (1;3) auswählbar ist, und wobei im Telekommunikationsnetzwerk (2) wenigstens eine Gruppe von empfangenden Telekommunikationsgeräten (T1,T2,T3; 6) in Abhängigkeit von der Kennung des sendenden Telekommunikationsgerätes (1;3) auswählbar ist, wobei die Netzwerkkennungen empfangender Telekommunikationsgeräte (T1,T2,T3; 6) in einer Liste vorgehalten sind und durch den Anruf einer speziellen Netzwerkkennung ein netzwerkbasierter Dienst startbar ist, **dadurch gekennzeichnet, dass** der Dienst eingerichtet ist, eine Nachricht an all diejenigen Telekommunikationsgeräte zu versenden, deren Netzwerkkenlnung in dieser Liste gespeichert sind und sämtliche in dieser Liste eingetragenen Netzwerkkennungen von empfangenden Telekommunikationsgeräten und die Netzwerkkennung des aufrufenden Telekommunikationsgeräts in Listen aller empfangenden Telekommunikationsgeräte einzutragen, so dass nach einem ersten initiierenden Aufruf alle durch das erstmalig aufrufende Telekommunikationsgerät bestimmten anderen Telekommunikationsgeräte identische Listen aufweisen, mit Ausnahme der eigenen Netzwerkkennung.

## Claims

1. Method of carrying out a communication over at least one telecommunication network between a sending telecommunication device and a group of receiving telecommunication devices, in which the group of receiving telecommunication devices is selected by reference to an identifier of the sending telecommunication device (1; 3), and wherein at least one group of receiving telecommunication devices (T1, T2, T3; 6) in the telecommunication network (2) is selected depending upon the identifier of the sending telecommunication device (1; 3), and wherein the network identifiers of receiving telecommunication devices (T1, T2, T3; 6) are maintained in a list, and a network based service is started by being called by a specific network identifier, **characterised in that** a message is sent by the service to all those telecommunication devices whose network identifier is stored in this list, wherein all the network identifiers of receiving telecommunication devices entered in this list and also the network identifier of the calling telecommunication device are entered in lists of all receiving telecommunication devices, so that after a first initiating call from the originally calling telecommunication device all the other telecommunication devices determined by the originally calling telecommunication device obtain identical lists, except for their own network identifier.

2. Method according to claim 1, **characterised in that** the identifier is a network identifier, a device identifier, a card identifier, or a user identifier, especially a biometric user identifier.

3. Method according to one of the preceding claims, **characterised in that** the group of receiving telecommunication devices (T1, T2, T3; 6) can be determined by the user of the sending telecommunication device (1; 3), especially by entry of the network identifiers in at least one list.

4. Method according to one of the preceding claims, **characterised in that** the group of receiving telecommunication devices (T1, T2, T3; 6) can be determined by the network operator, especially by entry of the latter's network identifier in at least one list.

5. Method according to one of the preceding claims, **characterised in that** there is stored under a key of the sending telecommunication device, a network identifier that is to be called, whose call starts the network based service to carry out the communication.

6. Method according to one of the preceding claims, **characterised in that** the network (4) which accepts from a sending telecommunication device (1) a message that is to be communicated, is a different one from the network (2) by which the message is sent to the receiving telecommunication devices (T1, T2, T3).

7. Method according to one of the preceding claims, **characterised in that** a communication connection between a sending telecommunication device and a receiving telecommunication device is transferred as a normal telephone call.

8. System for carrying out a communication over at least one telecommunication network between a sending telecommunication device and a group of receiving telecommunication devices, in which the group of receiving telecommunication devices can be selected by reference to an identifier of the sending telecommunication device (1; 3), and wherein at least one group of receiving telecommunication devices (T1, T2, T3; 6) in the telecommunication network (2) can be selected depending upon the identifier of the sending telecommunication device (1; 3), and wherein the network identifiers of receiving telecommunication devices (T1, T2, T3; 6) are maintained in a list, and a network based service can be started by being called by a specific network identifier, **characterised in that** the service is arranged to send a message to all those telecommunication devices whose network identifier is stored in this said list, and the service is arranged to enter from this said list into the lists referred to below all the network identifiers of receiving telecommunication devices entered in this said list and also the network identifier of the calling telecommunication device, namely to enter them into lists of all receiving telecommunication devices, so that after a first initiating call from the originally calling telecommunication device all the other telecommunication devices determined by that originally calling telecommunication device have identical lists, except for their own network identifier.

## Revendications

1. Procédé permettant d'effectuer une communication dans au moins un réseau de télécommunication entre un appareil de télécommunication émetteur et un groupe d'appareils de télécommunication récepteurs, le groupe d'appareils de télécommunication récepteurs étant sélectionné à l'aide d'un indicatif de l'appareil de télécommunication émetteur (1 ; 3) et, dans le réseau de télécommunication (2), au moins un groupe d'appareils de télécommunication récepteurs (T1, T2, T3 ; 6) est sélectionné en fonction de l'indicatif de l'appareil de télécommunication émetteur (1 ;3), les indicatifs de réseau des appareils de télécommunication récepteurs (T1, T2, T3 ; 6) étant présents dans une liste et un service basé sur le réseau étant démarré par l'appel d'un indicatif de réseau spécial, **caractérisé en ce qu'**un message est envoyé par le service à tous les appareils de télécommunication dont les indicatifs de réseau sont enregistrés dans cette liste, sachant que tous les indicatifs de réseau des appareils de télécommunication récepteurs inscrits dans cette liste et l'indicatif de réseau de l'appareil de télécommunication appelant sont inscrits dans des listes de tous les appareils de télécommunication récepteurs de sorte que, après un premier appel lancé, tous les autres appareils de télécommunication déterminés par l'appareil de télécommunication appelant en premier reçoivent des listes identiques à l'exception de leur propre indicatif de réseau.

2. Procédé selon la revendication 1, **caractérisé en ce que** l'indicatif est un indicatif de réseau, un indicatif d'appareil, un indicatif de carte ou un indicatif d'utilisateur, en particulier un indicatif d'utilisateur biométrique.

3. Procédé selon l'une quelconque des revendications précédentes, **caractérisé en ce que** le groupe d'appareils de télécommunication récepteurs (T1, T2, T3 ; 6) peut être déterminé par l'utilisateur de l'appareil de télécommunication émetteur (1 ; 3), en particulier par inscription des indicatifs de réseau dans au moins une liste.

4. Procédé selon l'une quelconque des revendications précédentes, **caractérisé en ce que** le groupe d'appareils de télécommunication récepteurs (T1, T2, T3 ; 6) peut être déterminé par l'exploitant du réseau, en particulier par inscription de son indicatif de réseau dans au moins une liste.

5. Procédé selon l'une quelconque des revendications précédentes, **caractérisé en ce qu'**un indicatif de réseau à appeler, par l'appel duquel le service basé sur le réseau est démarré pour exécuter la communication, est enregistré sous une touche de l'appareil de télécommunication émetteur.

6. Procédé selon l'une quelconque des revendications précédentes, **caractérisé en ce que** le réseau (4), qui reçoit un message à communiquer en provenance d'un appareil de télécommunication émetteur (1), est un autre réseau que le réseau (2) au moyen duquel le message est envoyé aux appareils de télécommunication récepteurs (T1, T2, T3).

7. Procédé selon l'une quelconque des revendications précédentes, **caractérisé en ce qu'**une liaison de communication entre un appareil de télécommunication émetteur et un appareil de télécommunication récepteur est effectuée au cours d'un appel téléphonique normal.

8. Système permettant d'exécuter une communication dans au moins un réseau de télécommunication entre un appareil de communication émetteur et un groupe d'appareils de télécommunication récepteurs, le groupe d'appareils de télécommunication récepteurs étant sélectionné à l'aide d'un indicatif de l'appareil de télécommunication émetteur (1 ; 3) et, dans le réseau de télécommunication (2), au moins un groupe d'appareils de télécommunication récepteurs (T1, T2, T3 ; 6) étant sélectionné en fonction de l'indicatif de l'appareil de télécommunication émetteur (1 ;3), les indicatifs de réseau des appareils de télécommunication récepteurs (T1, T2, T3 ; 6) étant présents dans une liste et un service basé sur le réseau pouvant être démarré par l'appel d'un indicatif de réseau spécial, **caractérisé en ce que** le service est aménagé pour envoyer un message à tous les appareils de télécommunication dont les indicatifs de réseau sont enregistrés dans cette liste et **en ce que** tous les indicatifs de réseau des appareils de télécommunication récepteurs inscrits dans cette liste et l'indicatif de réseau de l'appareil de télécommunication appelant sont inscrits dans des listes de tous les appareils de télécommunication récepteurs de sorte que, après un premier appel lancé, tous les autres appareils de télécommunication déterminés par l'appareil de télécommunication appelant en premier comportent des listes identiques à l'exception de leur propre indicatif de réseau.
